# EUROPEAN PATENT SPECIFICATION

(11) **EP 3 242 346 B1**
(45) Date of publication and mention of the grant of the patent: **19.12.2018**
(21) Application number: 17168364.2
(22) Date of filing: 27.04.2017
(51) Int. Cl.: H01M 2/16, H01M 2/18, H01M 10/04, H01M 10/0525, H01M 10/0583, H01M 10/42

(54) **ELECTRODE ASSEMBLY**
ELEKTRODENANORDNUNG
ASSEMBLAGE D'ÉLECTRODES

(30) Priority: 02.05.2016 KR 20160054018
(43) Date of publication of application: 08.11.2017
(73) Proprietor: Samsung SDI Co., Ltd, Gyeonggi-do 17084 (KR)
(72) Inventor: Cho, Gi-Bong, 17084 Yongin-si, Gyeonggi-do (KR)
(74) Representative: Gulde & Partner

(56) References cited:
- WO-A1-2014/017864
- WO-A1-2015/045796
- JP-A- S6 097 547
- JP-A- 2015 053 224
- JP-U- S5 624 065
- US-A1- 2013 236 767

## Description

### BACKGROUND OF THE INVENTION

### 1. Field of the Invention

The present invention relates to an electrode assembly. More particularly, the present invention relates to an electrode assembly for a rechargeable battery.

### 2. Description of the Related Art

A rechargeable battery is a power storage system which converts electrical energy into chemical energy to store it with excellent energy density. Unlike a primary battery that cannot be recharged, since the rechargeable battery can be recharged, it is widely used in information technology (IT) devices such as a smartphone, a cellular phone, a laptop computer, a tablet computer, and the like.

Recently, interest in electric cars has been increasing due to problems such as environment degradation and fossil fuel depletion, thus the rechargeable battery is used as a battery of the electric vehicle

According to such a trend, it is required for the rechargeable battery to have characteristics such as high density, high power, safety, etc.

As types of the rechargeable battery, a lead-acid battery, a nickel-cadmium battery, a nickel hydrogen battery, a lithium ion battery, a lithium polymer battery, a lithium metal battery, a lithium air battery, a sodium air battery, etc., are included. A rechargeable battery using lithium has a higher operating voltage and higher energy density per unit weight than other rechargeable batteries, such that it is increasingly applied to the portable IT devices and the electric vehicles.

When a short circuit therein occurs due to strong reactivity of the lithium in the lithium-based rechargeable battery, since combustion and explosion may occur, a safe structure in which a short circuit between electrodes may not occur even though changing/discharge are repeatedly performed is required. An electrode assembly structure of the rechargeable battery of which safety may be ensured and which may be rapidly manufactured is being developed.

Of well-known structures, first, there is an electrode assembly structure of a spiral-wound type in which positive and negative electrodes with a separation membrane therebetween are rolled, and second, there is an electrode assembly structure of a stack type in which positive and negative electrodes cut to be fitted to a size of the battery are alternately stacked with a separation membrane therebetween.

However, the electrode assembly structure of the spiral-wound type maybe deformed due to expansion of the negative electrode during charging/discharging. Meanwhile, although the electrode assembly structure of the stack type may be deformed less than the electrode assembly structure of the spiral-wound type, when the separation membrane shrinks due to heat during charging/discharging, or when the battery is deformed due to an external impact, a short circuit between the positive and negative electrodes may easily occur.

Particularly, in the case of the electrode assembly structure of the stack type which is manufactured through a laminating process of heating and attaching the electrode and the separation membrane, an electrolyte solution is slowly permeated into a surface of the electrode and a wetted state is nonuniform, thus capacity of the rechargeable battery may be nonuniform, and a lifespan thereof may be shortened. Electrode assemblies are disclosed in JP2015-53224 and JP60097547.

### SUMMARY OF THE INVENTION

The present invention has been made in an effort to provide an electrode assembly for a rechargeable battery that may lengthen a lifespan thereof by allowing an electrolyte solution of the rechargeable battery to be uniformly permeated.

The present invention has also been made in an effort to provide an electrode assembly for a rechargeable battery that may minimize deformation occurring while the rechargeable battery is charged or discharged, and that may minimize occurrence of a short circuit due to shrinkage of a separation membrane or an impact.

An exemplary embodiment of the present invention provides an electrode assembly including: a plurality of first electrodes including a first electrode portion including a first active material layer and a first uncoated region electrically connected to the first electrode portion; a separation membrane that receives each first electrode portion, includes a plurality of receiving portions arranged at predetermined intervals, and is curved so that respective surfaces of adjacent receiving portions face each other; and a plurality of second electrodes that are respectively positioned between the receiving portions facing each other to overlap the first electrode portion, and that respectively include a second electrode portion including a second active material layer and a second uncoated region electrically connected to the second electrode portion.

The separation membrane includes a first bonding portion that is positioned at an edge of the receiving portion and seals one side of the receiving portion, and the first uncoated region is configured to cross the first bonding portion to protrude outside of the receiving portion.

The separation membrane includes a pair of second bonding portions that are respectively connected with opposite ends of the first bonding portion and are respectively formed at an edge of the receiving portion in a direction crossing the first bonding portion.

The separation membrane may include a third bonding portion that is formed in a direction parallel to the first bonding portion, and the first bonding portion and the third bonding portion may be respectively positioned at opposite edges of the first electrode portion.

At least one of the first bonding portion, the second bonding portion, and the third bonding portion may be formed in plural.

The first bonding portion, the second bonding portion, and the third bonding portion may be formed along a border line of the first electrode portion to surround the first electrode portion.

The second electrode portion includes an extended electrode portion protruding outside of the border line of the first electrode portion, and the extended electrode portion includes at least one notch that is concave toward the border line of the first electrode portion.

One surface of the extended electrode portion may be bonded to one surface of the second bonding portion.

The second bonding portion may include a cutout corresponding to the notch.

The separation membrane may include a fourth bonding portion positioned between the adjacent receiving portions.

The electrode assembly may further include a fifth bonding portion positioned at an edge of the receiving portion overlapping the first uncoated region.

The separation membrane may include a sixth bonding portion formed in a direction parallel to the fifth bonding portion, and the fifth bonding portion and the sixth bonding portion may be respectively positioned at opposite sides of the first electrode portion.

At least one of the fourth bonding portion, the fifth bonding portion, and the sixth bonding portion may be formed in plural.

The fourth bonding portion, the fifth bonding portion, and the sixth bonding portion may surround the border line of the first electrode portion.

The first electrodes and the second electrodes may be alternately stacked.

The receiving portion may receive at least three of consecutive ends of the first electrode portion.

The separation membrane may include a first member and a second member that respectively overlap opposite surfaces of the first electrode portion with the first electrode portion therebetween, and the first member and the second member may be bonded along the border line of the first electrode portion to form the receiving portion.

The first electrode may a positive electrode, the second electrode may be a negative electrode, and an area of the second electrode portion may be larger than that of the first electrode portion.

According to the embodiment of the present invention, it is possible to increase capacity of a rechargeable battery while preventing a size of an electrode assembly from being increased, by alternately stacking positive and negative electrodes and separation membranes.

According to the exemplary embodiment of the present invention, by wrapping and fixing a positive electrode with a separation membrane and then by manufacturing a rechargeable battery, even if the separation membrane tends to shrink while a charging and discharging process is repeatedly performed, it is possible to prevent positive and negative electrodes from directly contacting each other to cause a short circuit, thereby improving safety of the rechargeable battery.

In addition, according to the exemplary embodiment of the present invention, it is possible to reduce time for aligning electrodes of different polarities while repeatedly folding one fixed electrode, thereby improving productivity of the rechargeable battery.

Further, according to the exemplary embodiment of the present invention, an electrolyte solution may easily and uniformly reach a surface of an electrode by positioning and fixing an electrode without heating and fusion-bonding a surface of an electrode and a surface of a separation membrane, thereby improving quality of the rechargeable battery.

### BRIEF DESCRIPTION OF THE DRAWINGS

FIG. 1 illustrates a top view of an electrode assembly for a rechargeable battery according to an exemplary embodiment of the present invention.
FIG. 2 illustrates a cross-sectional view taken along line II-II of FIG. 1.
FIG. 3 illustrates a cross-sectional view taken along line III-III of FIG. 1.
FIG. 4 illustrates a perspective view of a separation membrane for the electrode assembly of FIG. 1.
FIG. 5 to FIG. 7 illustrate separation membranes including a first electrode according to another exemplary embodiment of the present invention.
FIG. 8 to FIG. 16 illustrate separation membranes including a first electrode according to other exemplary embodiments of the present invention.
FIG. 17 to FIG. 20 illustrate separation membranes including a first electrode, and a second electrode, according to other exemplary embodiments of the present invention.
FIG. 21 to FIG. 24 illustrate schematic views for explaining a manufacturing method of an electrode assembly according to an exemplary embodiment of the present invention.
FIG. 25 to FIG. 27 illustrate schematic views for explaining a manufacturing method of an electrode assembly according to another exemplary embodiment of the present invention.
FIG. 28 illustrates a cross-sectional view taken along line XXIII-XXIII of FIG. 27.
FIG. 29 illustrates a perspective view of an electrode assembly for a rechargeable battery according to an exemplary embodiment of the present invention.
FIG. 30 illustrates a schematic perspective view of a pouch type of rechargeable battery including the electrode assembly of FIG. 29.

### DETAILED DESCRIPTION OF THE EMBODIMENTS

The present invention will be described more fully hereinafter with reference to the accompanying drawings, in which exemplary embodiments of the invention are shown..

To clearly describe the present disclosure, portions which do not relate to the description are omitted, and like reference numerals designate like elements throughout the specification.

Further, the size and thickness of each component shown in the drawings are arbitrarily shown for better understanding and ease of description, but the present disclosure is not limited thereto.

In the drawings, the thickness of layers, films, panels, regions, etc., are exaggerated for clarity. For better understanding and ease of description, the thicknesses of some layers and areas are exaggerated. It will be understood that when an element such as a layer, film, region, or substrate is referred to as being "on" another element, it can be directly on the other element or intervening elements may also be present.

In addition, unless explicitly described to the contrary, the word "comprise" and variations such as "comprises" or "comprising" will be understood to imply the inclusion of stated elements but not the exclusion of any other elements. An upper part of a target portion indicates an upper part or a lower part of the target portion, and it does not mean that the target portion is always positioned at the upper side based on a gravitational direction.

Hereinafter, a rechargeable battery according to an exemplary embodiment of the present invention will be described in detail with reference to the accompanying drawings.

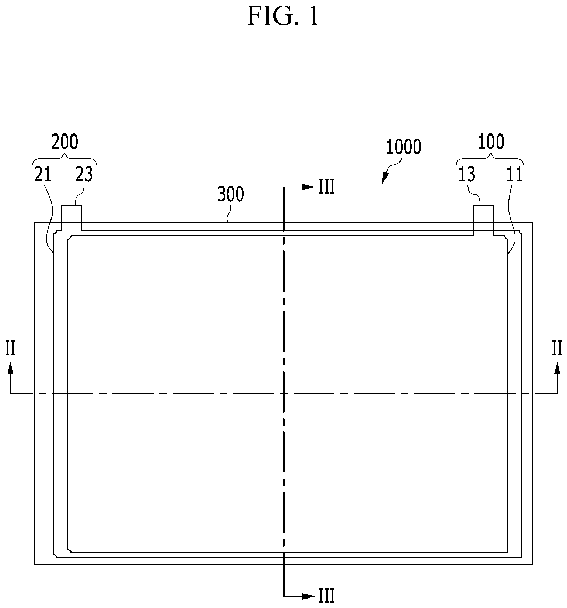

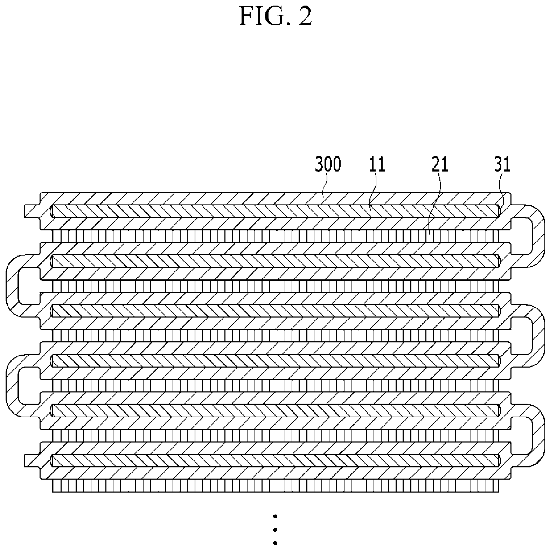

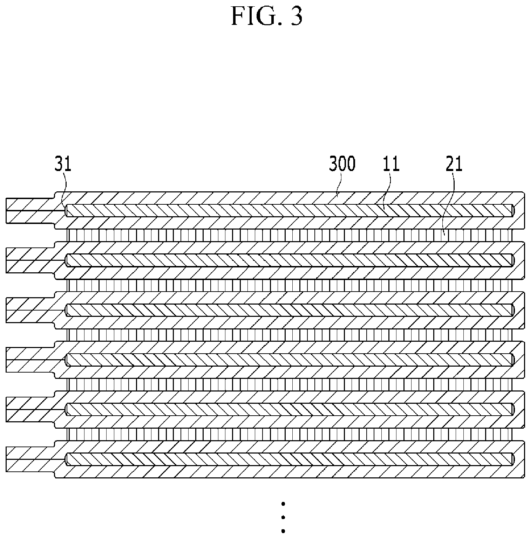

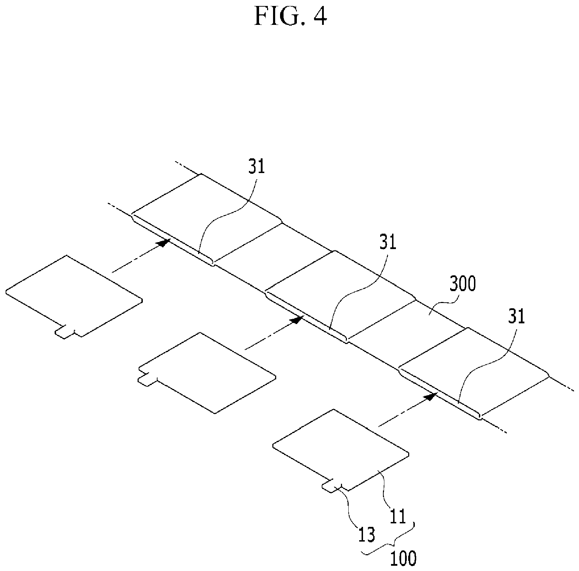

FIG. 1 illustrates a top view of an electrode assembly for a rechargeable battery according to an exemplary embodiment of the present invention, FIG. 2 illustrates a cross-sectional view taken along line II-II of FIG. 1, FIG. 3 illustrates a cross-sectional view taken along line III-III of FIG. 1, and FIG. 4 illustrates a perspective view of a separation membrane for the electrode assembly of FIG. 1.

As shown in FIG. 1 to FIG. 3, an electrode assembly 1000 according to an exemplary embodiment of the present invention includes a first electrode 100 and a second electrode 200 that face each other and a separation membrane 300 positioned therebetween. The electrode assembly 1000 includes a plurality of the first electrodes 100 and a plurality of the second electrodes 200, and the first electrodes 100 and the second electrodes 200 are stacked with the separation membrane 300 therewith.

The first electrode 100 includes a first electrode portion 11 and a first uncoated region 13, and may be connected to a positive electrode (not shown) of the rechargeable battery through the first uncoated region 13.

The first electrode portion 11 includes a first substrate and a first active material layer 11b disposed on the first substrate. The first active material layer 11b may be disposed at opposite surfaces of the first substrate, but it is not limited thereto, and if necessary, it may be disposed at only one surface of the first substrate.

The first substrate serves as a metal thin layer to provide a moving passage of charges generated in the first active material layer 11b, and supports the first active material layer 11b. For example, the first electrode portion 11 may be connected to the positive electrode of the rechargeable battery, and the first substrate may include aluminum or an aluminum alloy.

The first active material layer 11b may be made by mixing a mixture material for an electrode including an electrode active material, a binder, a conductor, etc. in a solvent to make a slurry, coating the slurry on at least one surface of the first substrate, and then drying and compressing it.

The first uncoated region 13 may be integrated with the first substrate and may protrude from one side of the first electrode portion 11, and at least one of first uncoated regions 13 may be provided along one side of the first electrode portion 11.

The second electrode 200 includes a second electrode portion 21 and a second uncoated region 23, and may be connected to a negative electrode (not shown) of the rechargeable battery.

The second electrode portion 21 includes a second substrate and a second active material layer disposed on the second substrate. The second active material layer may be disposed at opposite surfaces of the second substrate, but it is not limited thereto, and if necessary, it may be disposed at only one surface of the second substrate.

The second substrate serves as a metal thin layer to provide a moving passage of charges generated in the second active material layer, and supports the second active material layer. For example, the second electrode 200 may be connected to the negative electrode of the rechargeable battery, and the second substrate may include copper or a copper alloy.

The second active material layer may be made by mixing a mixture material for an electrode including an electrode active material, a binder, a conductor, etc. in a solvent to make a slurry, coating the slurry on at least one surface of the second substrate, and then drying and compressing it.

The second uncoated region 23 may be integrated with the second substrate and may protrude from one side of the second electrode portion 21, and at least one of first uncoated regions 13 may be provided along one side of the second electrode portion 21. The second uncoated region 23 is spaced apart from the first uncoated region 13 to not be short-circuited to each other.

The separation membrane 300 may be made with a porous film having high ion permeability and mechanical strength. For example, the separation membrane 300 may be made of an olefin-based polymer such as polyethylene, polypropylene, etc.

Referring to FIG. 4, the separation membranes 300 are arranged along a length direction of the separation membrane 300 at predetermined intervals, and may include a receiving portion 31 in which the first electrode portion 11 is received. The separation membrane 300 may include a single sheet member or a pair of members.

A size of the receiving portion 31 may be greater than that of the first electrode portion 11 so that the receiving portion 31 may wholly surround the first electrode portion 11. One side of the receiving portion 31 is opened so that the first electrode portion 11 may be inserted into the receiving portion 31 therethrough.

At least one of bonding portions may be disposed at an edge of the receiving portion 31. This will be described with reference to the accompanying drawings.

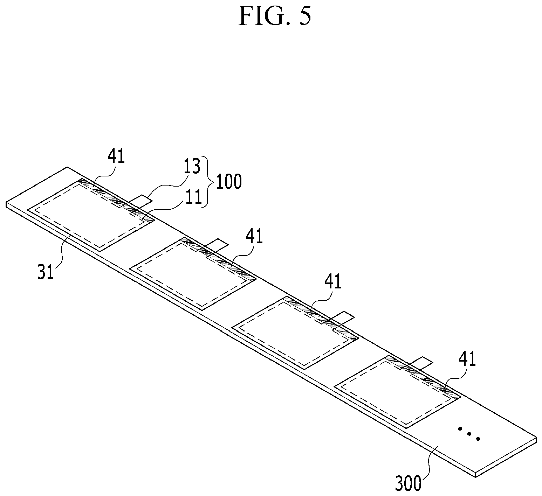

FIG. 5 to FIG. 7 illustrate separation membranes including a first electrode according to another exemplary embodiment of the present invention.

As shown in FIG. 5, a first bonding portion 41 may be provided at the edge of the receiving portion 31. The first bonding portion 41 is positioned at an edge of the opened side of the receiving portion 31, and may be bonded thereto by thermal-bonding, friction-welding, or an adhesive.

The first bonding portion 41 may be bonded in a state in which the first electrode portion 11 is inserted, and when the first bonding portion 41 is bonded, the first electrode portion 11 may be sealed in the receiving portion 31. In this case, the first uncoated region 13 crosses the first bonding portion 41 and protrudes outside of the receiving portion 31, and the first bonding portions 41 overlapping the first uncoated region 13 are respectively bonded to opposite surfaces of the first uncoated region 13.

As shown in FIG. 5, when the separation membrane 300 is formed as one sheet member, and is a pocket type in which only one side of the receiving portion 31 is opened, the first electrode portion 11 may be sealed by only the first bonding portion 41. However, the present invention is not limited thereto, and a bonding portion (not shown) may be further provided at another side that is not opened. When the bonding portion is provided at another side that is not opened, the separation membrane is closely attached to the first electrode portion 11 while shrinking, thereby further stably fixing the first electrode portion 11 in the receiving portion.

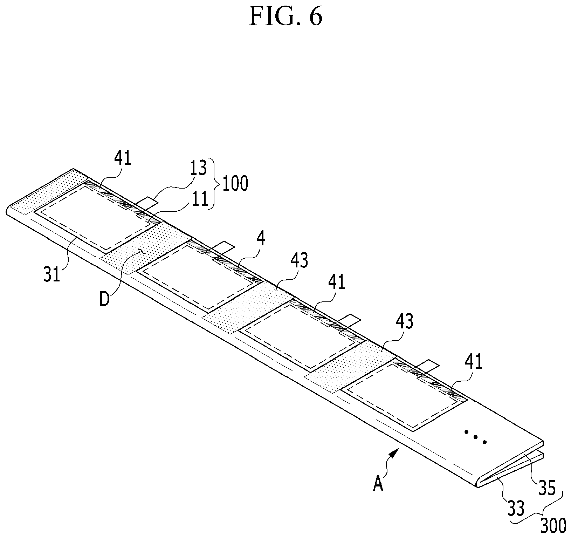

In addition, as shown in FIG. 6, the separation membrane 300 may further include a pair of second bonding portions 43. The pair of second bonding portions 43 are positioned at the edges of the receiving portion 31, may be respectively connected to opposite end portions of the first bonding portion 41, and may be disposed to be extended in a direction crossing the first bonding portion 41. The second bonding portion 43 is disposed in a region (D) between two receiving portions 31 adjacent to each other, and the two receiving portions 31 may share the second bonding portion 43.

The separation membrane 300 of FIG. 6 includes a first member 33 and a second member 35 positioned on opposite surfaces of the first electrode portion 11. The first member 33 and the second member 35 may be integrally formed. Accordingly, when one sheet member is folded along a folding line (A) while interposing the first electrode portion 11, the first member 33 and the second member 35 may be respectively disposed to face opposite surfaces of the first electrode portion 11.

As such, when the one sheet member is folded, since the folded portion is not opened, as shown in FIG. 6, the first electrode portion 11 may be sealed in the receiving portion by forming the first bonding portion and the second bonding portion. Further, as shown in FIG. 5, it is possible to further stably fix the first electrode portion by forming a bonding portion at an edge that is not opened.

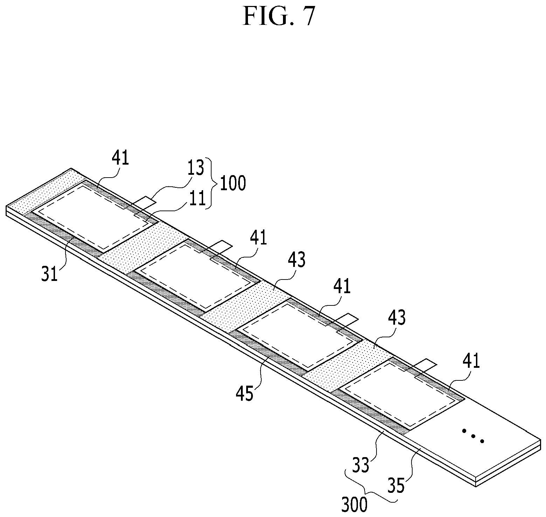

In addition, as shown in FIG. 7, the separation membrane 300 may further include a third bonding portion 45. The third bonding portion 45 may be positioned at an opposite side of the first electrode portion 11. In this case, respective ends of the first bonding portion 41, the second bonding portion 43, and the third bonding portion 45 may be connected to each other to surround a border line of the first electrode portion 11.

The separation membrane 300 of FIG. 7 includes the first member 33 and the second member 35 that are respectively positioned on the opposite surfaces of the first electrode portion 11. In this case, the first member 33 and the second member 35 are separated.

As such, when the first member 33 and the second member 35 are separated, since all edges of the first electrode portion 11 are opened, the first electrode portion 11 may be sealed in the receiving portion 31 by forming the first bonding portion 41, the second bonding portion 43, and the third bonding portion 45.

As in the exemplary embodiments described above, when the first bonding portion 41, the second bonding portion 43, and the third bonding portion 45 are formed, the first electrode portion 11 may be sealed in the receiving portion 31.

Alternatively, when the second bonding portion 43 is further formed together with the first bonding portion 41, or when the second bonding portion 43 and the third bonding portion 45 are formed together with the first bonding portion 41, it is possible to further stably fix the first electrode portion 11 in the receiving portion. For example, when the bonding portion is formed by thermal-bonding and the like, the receiving portion shrinks due to heat, thus the first bonding portion 41 to the third bonding portion 45 may be adjacent to or closely contact the first electrode portion 11. Accordingly, a space in which the first electrode portion 11 moves in the receiving portion decreases to be able to fix it in the receiving portion 31. As such, when the first electrode portion 11 is fixed in the receiving portion 31, a process for aligning the first electrode portion 11 and the second electrode portion 21 may be easily performed during the manufacturing process of the electrode assembly.

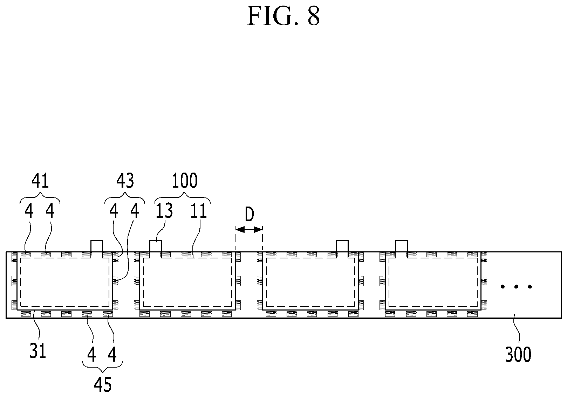

In the exemplary embodiment described above, it is exemplarily described that the first electrode portion 11 is sealed in the receiving portion 31 by forming the first bonding portion 41, the second bonding portion 43, or the third bonding portion 45 and by connecting them, but the present invention is not limited thereto, and as shown in FIG. 8 described later, at least one of the first bonding portion 41 to the third bonding portion 45 may include a plurality of small bonding portions.

Referring back to FIG. 2 and FIG. 3, the separation membrane 300 may be repeatedly folded so that surfaces of the adjacent receiving portions 31 face each other, thus it has a structure in which a plurality of receiving portions 31 are stacked. For example, the separation membrane 300 may be folded in a zigzag form. Accordingly, the first electrode portions 11 respectively inserted into the receiving portion 31 are also repeatedly stacked.

The second electrode 200 is positioned between the receiving portions 31 respectively including the first electrode 100, and the first electrode portion 11 and the second electrode portion 21 are disposed to correspond to each other. As in the present invention, in the state in which the first electrode portion 11 is received in the receiving portion 31, when the second electrode 200 is disposed between the surfaces of the receiving portion 31 folded to face each other, the first electrode 100, the separation membrane 300, and the second electrode 200 may be alternately stacked.

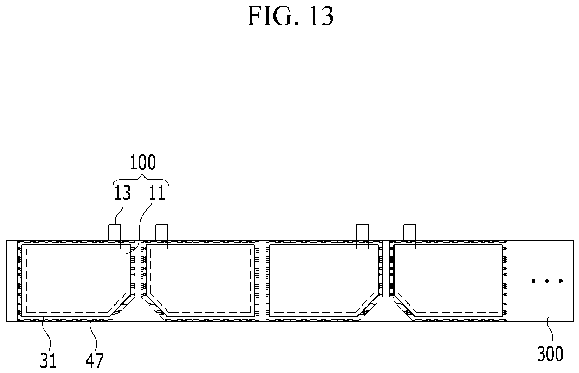

In the exemplary embodiments described above, it is described that the first electrode portion is sealed in the receiving portion by forming the first bonding portion, the second bonding portion, and the third bonding portion, but the present invention is not limited thereto, and as shown in FIG. 8 and FIG. 13, a small bonding portion may be included.

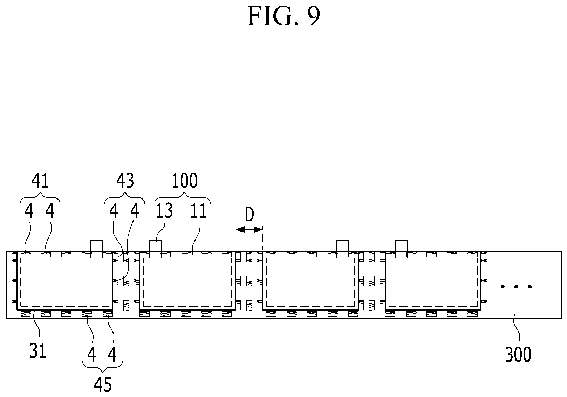

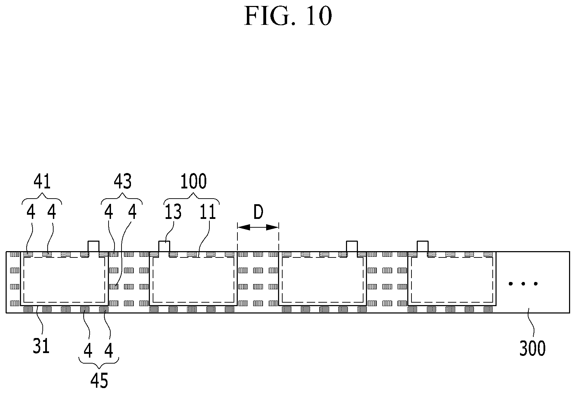

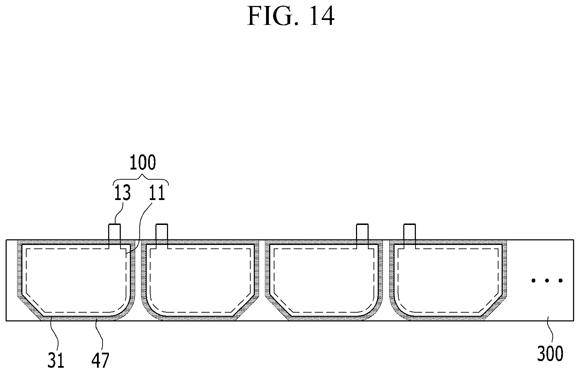

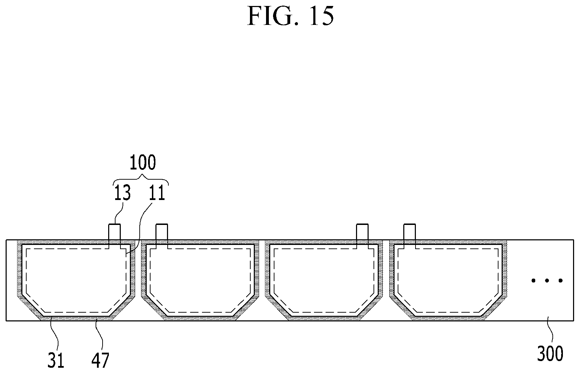

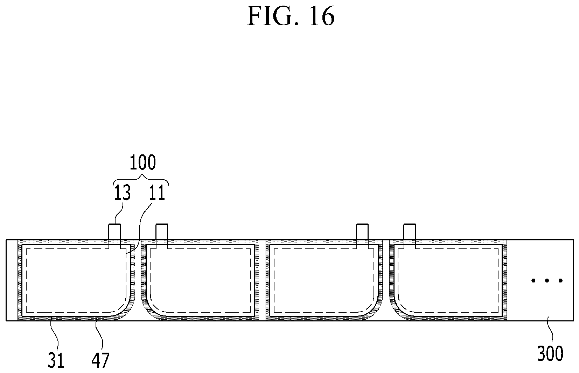

FIG. 8 to FIG. 16 illustrate separation membranes including a first electrode according to other exemplary embodiments of the present invention.

Since the first electrode and the separation membrane of FIG. 8 to FIG. 16 are substantially similar to the first electrode and the separation membrane of FIG. 1 to FIG. 7, only different parts will now be described in detail.

As shown in FIG. 8 to FIG. 10, the separation membrane 300 includes the first bonding portion 41, the second bonding portion 43, and the third bonding portion 45 that surround the first electrode portion 11, and each bonding portion includes a plurality of small bonding portions 4. The plurality of small bonding portions may be disposed at predetermined intervals. As shown in FIG. 8 to FIG. 10, the plurality of small bonding portions 4 may be disposed along the border line of the first electrode portion 11, or may be variously disposed in a region (D) between the receiving portions, and the small bonding portions may be disposed in a matrix form. The bonding portion may be formed to have various shapes according to a thickness and elasticity of the separation membrane 300 and a size of a region (D) between two receiving portions adjacent to each other.

As such, when a plurality of first bonding portions 41 to a plurality of third bonding portions 45 are formed, it is possible to stably fix the first electrode portion 11 and to easily move the electrolyte.

In the exemplary embodiments of FIG. 5 to FIG. 7, it is illustrated that the second bonding portion 43 is positioned between two receiving portions 31 adjacent to each other and the two receiving portion 31 share one second bonding portion 43, but it is not limited thereto.

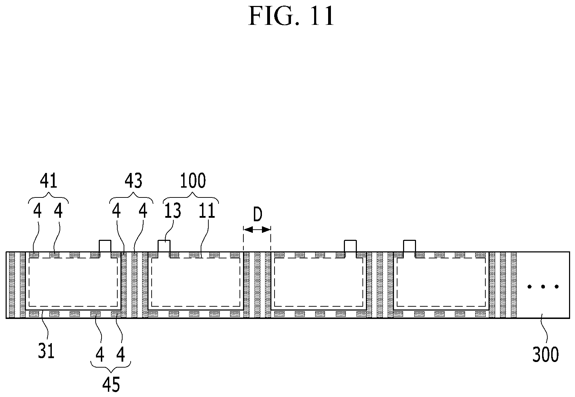

As shown in FIG. 11, the second bonding portion 43 may be disposed at each of the edges of the two receiving portions 31 adjacent to each other. In this case, when the separation membrane 300 includes the first member and the second member, the first member and the second member positioned in the region (D) between the adjacent second bonding portions 43 may be separated.

When the first member and the second member are included and one second bonding portion 43 is disposed in the region (D) between the adjacent receiving portions 31 (refer to FIG. 5 to FIG. 7), since the thickness thereof increases, they may not be easily folded. In addition, when a fusion-bonding defect occurs, the first member and the second member may be separated.

However, as shown in FIG. 11, when the second bonding portion 43 is disposed at each receiving portion 31, since the first member and the second member positioned in the region (D) between the adjacent second bonding portions 43 are separated, the folded thickness does not increase, thus bending stress may be applied to each of them to be easily folded. In addition, since at least two of the second bonding portions 43 are disposed in the region (D) between two adjacent receiving portions, even though the fusion-bonding defect occurs at any one thereof, the first member and the second member are not separated.

Further, as shown in FIG. 11, in the case that a plurality of the second bonding portions 43 are disposed at predetermined intervals in the region (D) between two adjacent receiving portions, when the separation membrane 300 is folded to form the electrode assembly, since a position at which the separation membrane 300 is folded is guided, the separation membrane 300 may be easily folded.

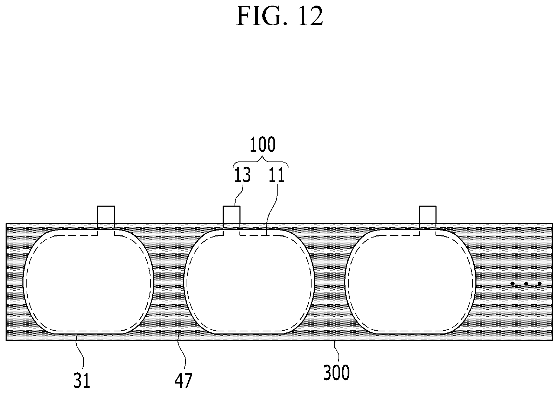

In the exemplary embodiments described above, it is exemplified that the first electrode portion is substantially quadrangular, but the present is not limited thereto, and electrode portions having various shapes such as a shape in which the first electrode portion 11 is substantially circular as shown in FIG. 12 or a shape in which at least one corner thereof is chamfered as shown in FIGS. 13 to 16 may be stably fixed. In this case, as shown in FIG. 12, a bonding portion 47 may be formed in all regions between electrode portions, and as shown in FIG. 13 to FIG. 16, it may be formed to have a linear shape along border lines of the electrode portions, and as described above, it may be formed to have a small bonding portion.

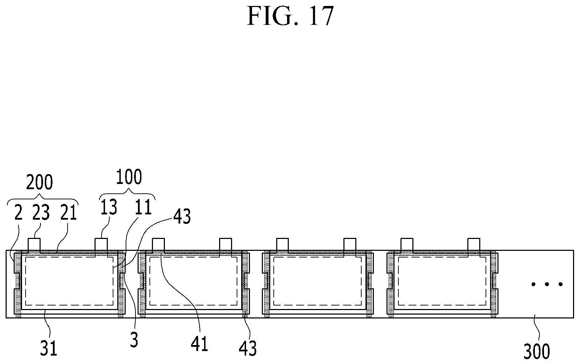

FIG. 17 to FIG. 20 illustrate separation membranes including a first electrode, and a second electrode, according to other exemplary embodiments of the present invention.

As shown in FIG. 17, the first electrode 100 is fixed in the receiving portion provided in the separation membrane 300, and the first electrode portion 11 overlaps the second electrode portion 21.

The second electrode portion 21 may include an extended electrode portion 2 protruding outside of the border line of the first electrode portion 11. The extended electrode portion 2 may have at least one notch 3 that is concave toward the border line of the first electrode portion 11. As in the exemplary embodiment of the present invention, when the extended electrode portion 2 is formed to have the notch 3, an area in which the second bonding portion 43 and the extended electrode portion 2 contact each other increases by the area of the notch 3. Accordingly, when the second bonding portion 43 is thermal-bonded, since second bonding portion 43 surrounds the wider area of the second electrode portion 21 while the second bonding portion 43 shrinks, the first electrode portion 11 may be further tightly fixed to the separation membrane 300.

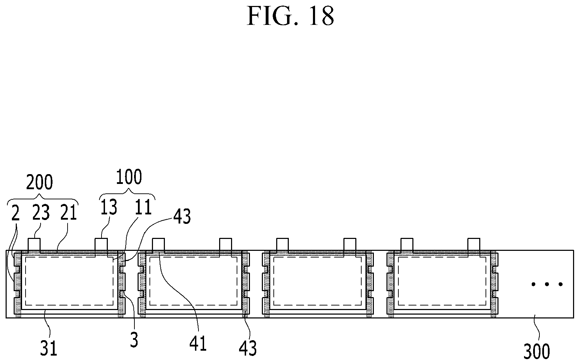

In FIG. 17, the extended electrode portion 2 is illustrated to be extended along one side of the second electrode portion 21, but it is not limited thereto, and as shown in FIG. 18, a plurality of extended electrode portions that may be separated may be formed. At least one notch 3 may be formed at the separated extended electrode portion 2.

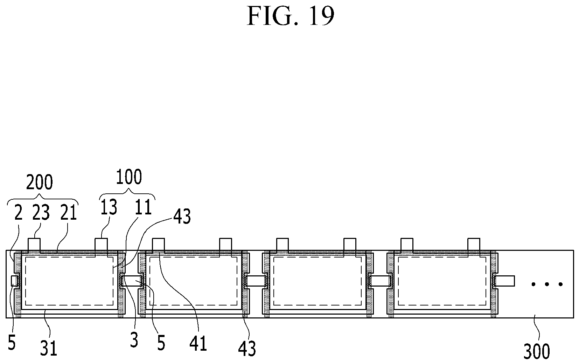

As shown in FIG. 19, the second bonding portion 43 may further include a cutout 5 corresponding to the notch 3. As such, when the cutout 5 corresponding to the notch 3 is formed, the separation membrane 300 may be easily folded. The separation membrane 300 is folded at the second bonding portion 43, and in this case, an area of the second bonding portion 43 decreases by the area of the cutout 5, such that the bending stress by the second bonding portion 43 decreases, thereby easily folding the separation membrane 300.

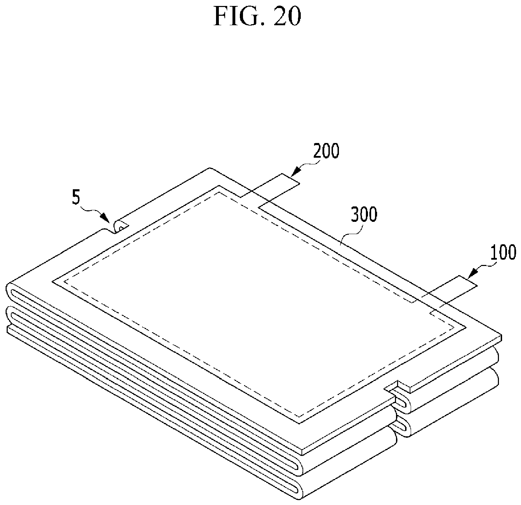

As shown in FIG. 19, the cutout 5 may be formed before the separation membrane is folded, but it is not limited thereto, and as shown in FIG. 20, after repeatedly folding a plurality of separation membranes for forming the electrode assembly, the cutout 5 may be formed. In this case, a border line of the cutout 5 is positioned within a border line of the notch 3, and the border line of the cutout 5 is spaced apart from the border line of the notch 3.

As such, when the cutout 5 is formed within the border line of the notch 3, it is possible to strongly fix the first electrode portion 11 while minimizing a size of the second bonding portion 43 surrounding the notch 3.

Hereinafter, a manufacturing method of the electrode assembly according to the exemplary embodiment of the present invention will be described in detail with reference to the accompanying drawings.

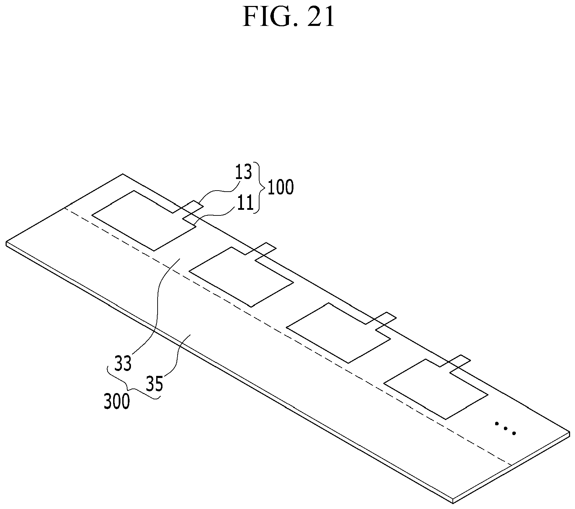

FIG. 21 to FIG. 24 illustrate schematic views for explaining a manufacturing method of the electrode assembly according to the exemplary embodiment of the present invention.

As shown in FIG. 21, the first electrode, the second electrode, and the separation membrane 300 are prepared. The separation membrane 300 includes the first member 33 and the second member 35. The first member and the second member may be integrally connected.

Next, the first electrodes 100 are disposed at predetermined intervals on the first member. In this case, since the first electrode portions 11 are disposed at predetermined intervals on the first member, the first member between the adjacent first electrode portions 11 is exposed. The first uncoated region 13 is disposed to protrude outside of the border line of the separation membrane.

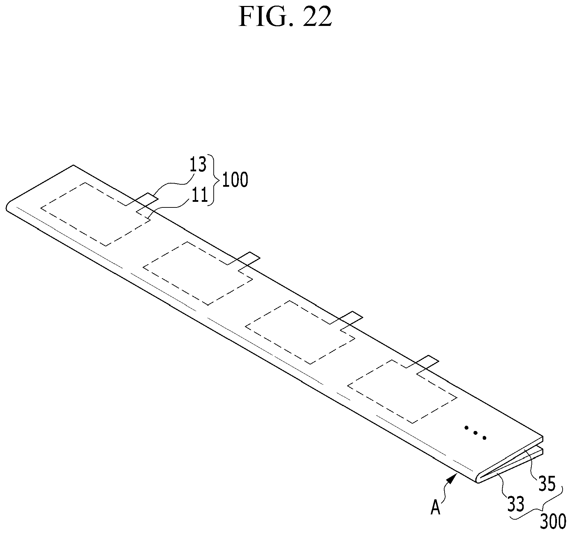

Next, as shown in FIG. 22, the separation membrane 300 is folded so that the first electrode portion 11 is covered. In this case, an exposed portion of the first member 33 that does not overlap the first electrode portion 11 and the second member 35 of the separation membrane 300 are folded to directly contact each other, and a folding line (A) of the first member may be formed along an opposite side at which the first electrode portion 11 is not disposed based on the first electrode portion 11.

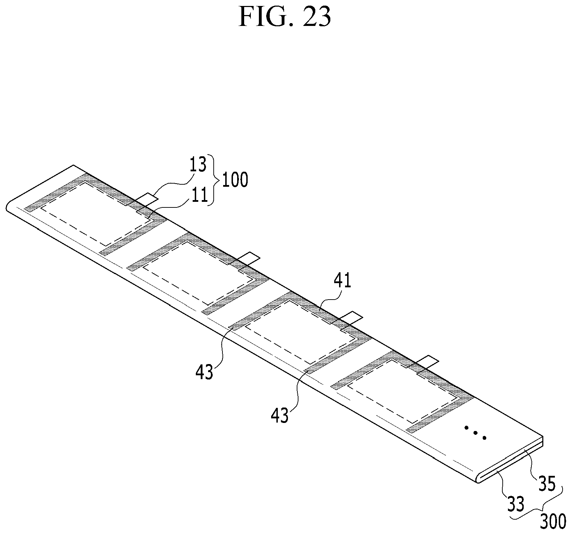

Next, as shown in FIG. 23, the first bonding portion 41 and the second bonding portion 43 are formed by bonding portions of which the first member and the second member directly contact. Since the separation membrane 300 in which the first member and the second member are integrated is used, the third bonding portion may be omitted. The bonding portions may be formed by thermal-bonding using heat generated from a laser or heater, friction welding such as ultrasonic or high-frequency welding, or an adhesive.

As such, when the first bonding portion 41 and the second bonding portion 43 are formed, since a plurality of first electrodes 100 may be fixed to the separation membrane 300, a subsequent process may be easily performed.

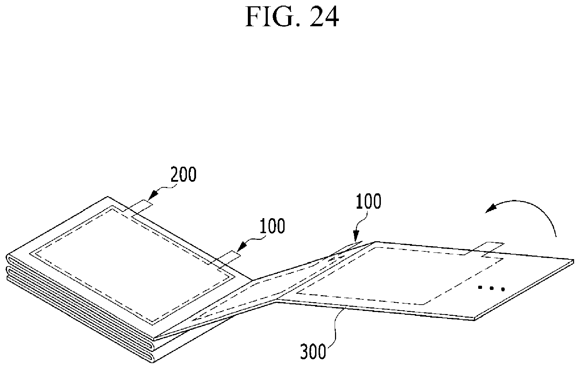

Next, as shown in FIG. 24, the first electrode portion 11 of the first electrode 100 and the second electrode 200 are disposed to overlap each other with the separation membrane 300 therebetween. Since the first electrode 100 is fixed to the separation membrane, the second electrode may be easily aligned on the first electrode.

Then, the separation membrane 300 is folded to overlap the second electrode. In this case, the first electrode portion 11 included in the separation membrane 300 is folded to overlap the second electrode portion 21.

When the separation membrane 300 is repeatedly folded, since the second electrode 200 that is not fixed to the separation membrane 300 may be separated, a process in which the second electrode 200 is disposed and folded is repeatedly performed. In this case, a folded direction is opposite to a previously folded direction.

When the second electrodes are disposed and folded at opposite sides of the first electrode (not shown) at one time, it is possible to improve alignment precision and to increase productivity more than when the second electrodes are disposed one by one.

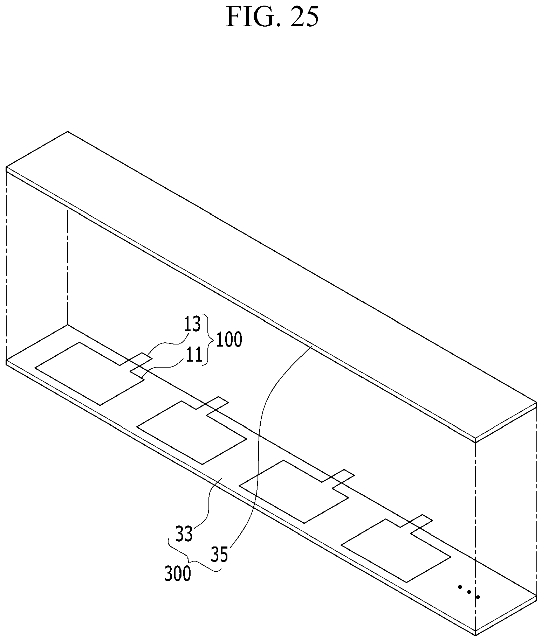

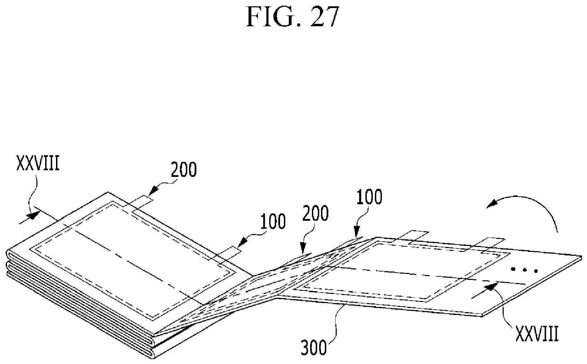

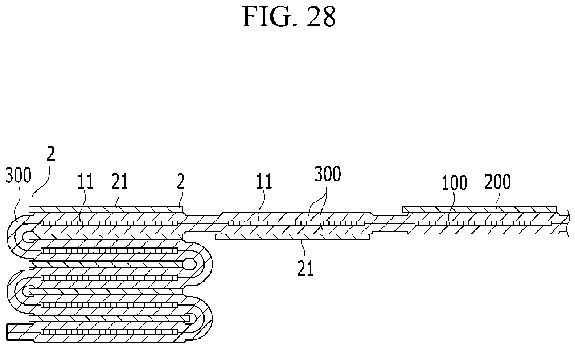

FIG. 25 to FIG. 27 illustrate schematic views for explaining a manufacturing method of an electrode assembly according to another exemplary embodiment of the present invention, and FIG. 28 illustrates a cross-sectional view taken along line XXIII-XXIII of FIG. 27.

As shown in FIG. 25, the first electrode, the second electrode, and the separation membrane 300 are respectively prepared. The separation membrane 300 includes the first member 33 and the second member 35. The first member and the second member 35 are separated from each other, and have the same size.

Next, the first electrodes 100 are disposed at predetermined intervals on the first member 33. In this case, since the first electrodes 100 are disposed at predetermined intervals on the first member, the first member between the adjacent first electrode portions 11 is exposed. In this case, the first uncoated region 13 is disposed to protrude outside of the border line of the separation membrane.

Then, the second member 35 is aligned on the first member 33.

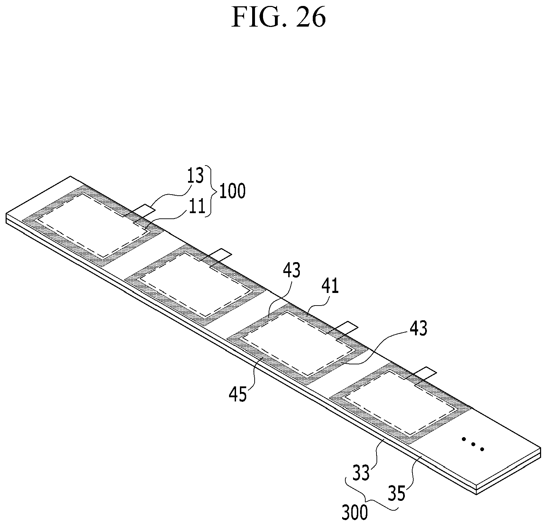

Next, as shown in FIG. 26, the first member 33 and the second member 35 are overlapped so that the exposed portion of the first member 33 that does not overlap the first electrode portion 11 and the second member 35 directly contact each other.

Then, the first bonding portion 41, the second bonding portion 43, and the third bonding portion 45 are formed by thermal-bonding portions of which the first member 33 and the second member 35 directly contact. Since the first member 33 and the second member 35 are separated, it is preferable that the first bonding portion 41 to the third bonding portion 45 are formed to surround the first electrode portion 11 such that the first electrode 100 is fixed.

Next, as shown in FIGS. 27 and 28, the first electrode portion 11 of the first electrode 100 and the second electrode 200 are disposed to overlap each other with the separation membrane 300 therebetween. Since the first electrode 100 is fixed to the separation membrane, the second electrode may be easily aligned on the first electrode. In addition, when the second electrode 200 having the extended electrode portion 2 is disposed to fix the extended electrode portion 2 to the separation membrane 300, it is possible to prevent the second electrode 200 from being separated and from being abnormally aligned during a subsequent process. In this case, the extended electrode portion 2 may be attached to the separation membrane by thermal-bonding, which uses some of the separation membrane that is melted, or by an adhesive.

According to the exemplary embodiments of the present invention described above, the plurality of electrodes are arranged on the spread and extended separation membrane at predetermined intervals, the separation membrane again overlaps thereon, and then the separation membranes are bonded along the edge of each electrode, thereby improving safety of the rechargeable battery by basically blocking a possibility of contacting a counter electrode added in a subsequent process.

In addition, the arranged electrodes are received in the separation membrane, and the separation membranes around the electrodes are bonded only to each other, thus the electrodes may be positioned to be tightly fixed, and the electrolyte solution may freely and smoothly flow.

As such, when the electrode assembly is formed through the process in which the counter electrodes are sequentially and alternately disposed or bonded at the outside thereof to be folded in a zigzag form (or a folding screen form) after the electrodes is sealed or fixed between the separation membranes arranged at predetermined intervals, it is possible to improve safety of the rechargeable battery and impregnation of the electrolyte solution, and since a plurality of electrodes are simultaneously arrayed, sealed, and folded, it is possible to improve productivity .

Further, since the electrodes are positioned to be fixed without heating and/or thermal-bonding a surface of the electrode and a surface of the separation membrane, the electrolyte solution may easily and uniformly reach the surface of the electrode, thereby stably improving quality of the rechargeable battery.

In addition, as in the present invention, when the rechargeable battery is manufactured after one electrode (e.g., a positive electrode) is wrapped with the separation membrane and then fixed, even though the separation membrane tends to shrink due to heat generated in a repeated charging or discharging process, electrodes (positive and negative electrode) with different polarities may be prevented from directly contacting the separation membrane therebetween to cause a short-circuit, thereby improving safety of the rechargeable battery.

The aforementioned electrode assembly may be used as an electrode assembly of a rechargeable battery. Hereinafter, a rechargeable battery including the aforementioned electrode assembly will be described with reference to the accompanying drawings.

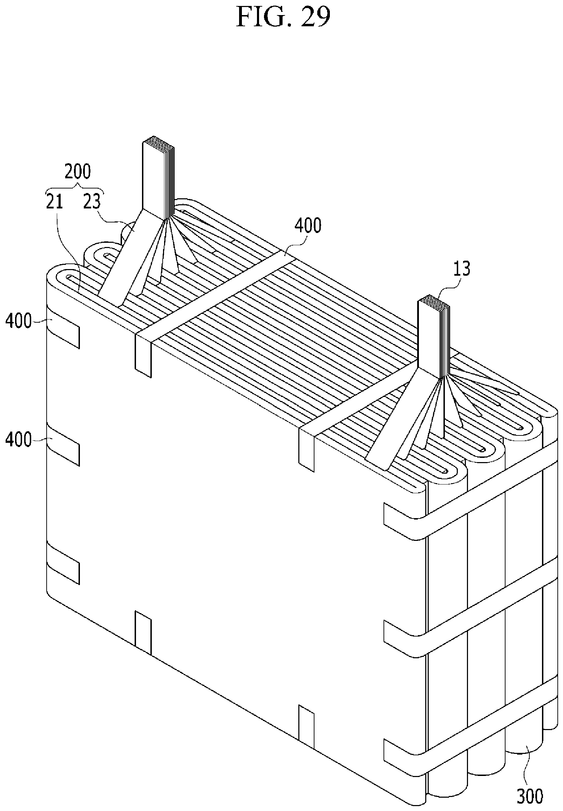

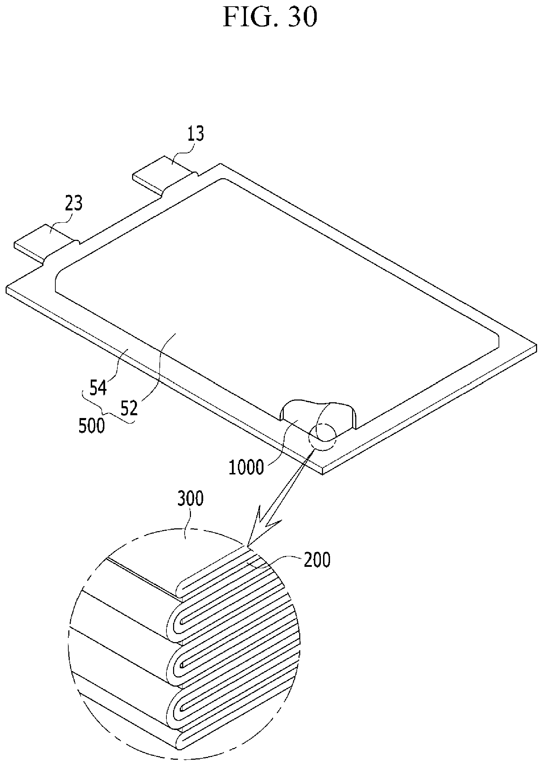

FIG. 29 illustrates a perspective view of an electrode assembly for a rechargeable battery according to an exemplary embodiment of the present invention, and FIG. 30 illustrates a schematic perspective view of a pouch type of rechargeable battery including the electrode assembly of FIG. 29.

As shown in FIG. 29 and FIG. 30, a rechargeable battery according to an exemplary embodiment of the present invention includes the electrode assembly 1000 and a case for accommodating the electrode assembly 1000. The case may be a square type of case or a pouch type of case 500, and the pouch type of case 500 will now be exemplarily described.

The electrode assembly 1000 may correspond to the electrode assembly of FIG. 1. In this case, the same polarities of a plurality of first and second uncoated regions 13 and 23 are overlapped with each other, and may be welded by ultrasonic welding and the like.

The electrode assembly 1000 is formed by repeatedly folding the separation membrane 300, and the folded shape may be fixed by a fixing member 400, thereby fixing the folded shape. The fixing member 400 may have a strip shape surrounding an edge of the electrode assembly 1000 or entirely crossing the electrode assembly 1000.

The electrode assembly 1000 is inserted into the pouch together with an electrolyte solution, which then may be sealed. The electrolyte solution may include an organic solvent such as EC, PC, DEC, EMC, and EMC and a lithium salt such as LiPF₆ and LiBF₄. The electrolyte solution may be liquid, solid, or gel.

The pouch type of case 500 may be formed to have a multi-layered sheet structure. For example, the pouch includes a polymer sheet that forms an inner side and performs insulating and thermo-bonding functions, a PET (polyethylene terephthalate) sheet that forms an outer side and performs a protecting function, a nylon sheet or a PET-nylon composite sheet, and a metal sheet that provides mechanical strength. The metal sheet may be formed as, for example, an aluminum sheet, and is interposed between the polymer sheet and the nylon sheet.

The pouch type of case 500 is positioned at a receiving portion 52 into which the electrode assembly 1000 is inserted and at the outside of the receiving portion, and includes an edge portion 54 bonded by thermal-bonding for sealing.

## Claims

1. An electrode assembly comprising:
a plurality of first electrodes (100) including a first electrode portion (11) including a first active material layer (11b) and a first uncoated region (13) electrically connected to the first electrode portion (11);
a separation membrane (300) that receives each first electrode portion (11), includes a plurality of receiving portions (31) arranged at predetermined intervals, and is curved so that respective surfaces of adjacent receiving portions (31) face each other; and
a plurality of second electrodes (200) that are respectively positioned between the receiving portions (31) facing each other to overlap the first electrode portion (11), and that respectively include a second electrode portion (21) including a second active material layer and a second uncoated region (23) electrically connected to the second electrode portion (21),
wherein the separation membrane (300) includes a first bonding portion (41) that is positioned at an edge of the receiving portion (31) and seals one side of the receiving portion (31), and the first uncoated region (13) is configured to cross the first bonding portion (41) to protrude outside of the receiving portion (31),
wherein
the separation membrane (300) includes a pair of second bonding portions (43) that are respectively connected with opposite ends of the first bonding portion (41) and are respectively formed at an edge of the receiving portion (31) in a direction crossing the first bonding portion (41), and
wherein
the second electrode portion (21) includes an extended electrode portion (2) protruding outside of the border line of the first electrode portion (11), and the extended electrode portion (2) includes at least one notch (3) that is concave toward the border line of the first electrode portion (11).

2. The electrode assembly of claim 1, wherein
the separation membrane (300) includes a third bonding portion (45) that is formed in a direction parallel to the first bonding portion (41), and
the first bonding portion (41) and the third bonding portion (45) are respectively positioned at opposite edges of the first electrode portion (11).

3. The electrode assembly of claim 2, wherein
at least one of the first bonding portion (41), the second bonding portion (43), and the third bonding portion (45) is formed in plural and/or, wherein
the first bonding portion (41), the second bonding portion (43), and the third bonding portion (45) are formed along a border line of the first electrode portion (11) to surround the first electrode portion (11).

4. The electrode assembly of claim 1, wherein
one surface of the extended electrode portion (2) is bonded to one surface of the second bonding portion (43).

5. The electrode assembly of claim 4, wherein
the second bonding portion (43) includes a cutout (5) corresponding to the notch.

6. The electrode assembly of claim 2, wherein
the separation membrane includes a fourth bonding portion (43) positioned between the adjacent receiving portions (31)

7. The electrode assembly of claim 6, further comprising
a fifth bonding portion (41) positioned at an edge of the receiving portion overlapping the first uncoated region (13).

8. The electrode assembly of claim 7, wherein
the separation membrane (300) includes a sixth bonding portion (45) formed in a direction parallel to the fifth bonding portion (41), and
the fifth bonding portion (41) and the sixth bonding portion (45) are respectively positioned at opposite sides of the first electrode portion.

9. The electrode assembly of claim 8, wherein
at least one of the fourth bonding portion (43), the fifth bonding portion (41), and the sixth bonding portion (45) is formed in plural and/or wherein
the fourth bonding portion (43), the fifth bonding portion (41), and the sixth bonding portion (45) are formed to surround the border line of the first electrode portion (11).

10. The electrode assembly of one of the preceding claims, wherein
the first electrodes (100) and the second electrodes (200) are configured to be alternately stacked and/or wherein
the receiving portion (31) is configured to receive at least three of consecutive ends of the first electrode portion (11).

11. The electrode assembly of one of the preceding claims, wherein
the separation membrane (300) includes a first member (33) and a second member (35) that respectively overlap opposite surfaces of the first electrode portion (11) with the first electrode portion (11) therebetween, and
the first member (33) and the second member (35) are configured to be bonded along the border line of the first electrode portion (11) to form the receiving portion (31).

12. The electrode assembly of one of the preceding claims, wherein
the first electrode (100) is a positive electrode, and the second electrode (200)is a negative electrode and/or wherein
an area of the second electrode portion (21) is larger than that of the first electrode portion (11).

## Patentansprüche

1. Elektrodenanordnung, umfassend:
eine Mehrzahl von ersten Elektroden (100), die einen ersten Elektrodenabschnitt (11) mit einer ersten Aktivmaterialschicht (11b) und einen ersten unbeschichteten Bereich (13) enthalten, welcher mit dem ersten Elektrodenabschnitt (11) elektrisch verbunden ist;
eine Trennmembran (300), die jeden ersten Elektrodenabschnitt (11) aufnimmt, eine Mehrzahl von in vorgegebenen Abständen angeordneten aufnehmenden Abschnitten (31) enthält und so gekrümmt ist, dass jeweilige Oberflächen benachbarter aufnehmender Abschnitte (31) einander zugewandt sind; und
eine Mehrzahl von zweiten Elektroden (200), die jeweils zwischen den einander zugewandten aufnehmenden Abschnitten (31) angeordnet sind, um den ersten Elektrodenabschnitt (11) zu überlappen, und die jeweils einen zweiten Elektrodenabschnitt (21) mit einer zweiten Aktivmaterialschicht und einen zweiten unbeschichteten Bereich (23) enthalten, welcher mit dem zweiten Elektrodenabschnitt (21) elektrisch verbunden ist,
wobei die Trennmembran (300) einen ersten Bindeabschnitt (41) enthält, der an einem Rand des aufnehmenden Abschnitts (31) angeordnet ist und eine Seite des aufnehmenden Abschnitts (31) versiegelt, und der erste unbeschichtete Bereich (13) dazu konfiguriert ist, den ersten Bindeabschnitt (41) zu durchqueren, um außerhalb des aufnehmenden Abschnitts (31) herauszuragen,
wobei
die Trennmembran (300) ein Paar von zweiten Bindeabschnitten (43) enthält, die jeweils mit gegenüberliegenden Enden des ersten Bindeabschnitts (41) verbunden sind und die jeweils an einem Rand des aufnehmenden Abschnitts (31) in einer den ersten Bindeabschnitt (41) durchquerenden Richtung ausgebildet sind, und
wobei
der zweite Elektrodenabschnitt (21) einen verlängerten Elektrodenabschnitt (2) enthält, der außerhalb der Begrenzungslinie des ersten Elektrodenabschnitts (11) herausragt, und der verlängerte Elektrodenabschnitt (2) mindestens eine Aussparung (3) enthält, die in Richtung der Begrenzungslinie des ersten Elektrodenabschnitts (11) konkav ist.

2. Elektrodenanordnung nach Anspruch 1, wobei
die Trennmembran (300) einen dritten Bindeabschnitt (45) enthält, der in einer Richtung parallel zu dem ersten Bindeabschnitt (41) ausgebildet ist, und
der erste Bindeabschnitt (41) und der dritte Bindeabschnitt (45) jeweils an gegenüberliegenden Rändern des ersten Elektrodenabschnitts (11) angeordnet sind.

3. Elektrodenanordnung nach Anspruch 2, wobei
der erste Bindeabschnitt (41) und/oder der zweite Bindeabschnitt (43) und/oder der dritte Bindeabschnitt (45) in einer Mehrzahl ausgebildet sind und/oder wobei
der erste Bindeabschnitt (41), der zweite Bindeabschnitt (43) und der dritte Bindeabschnitt (45) entlang einer Begrenzungslinie des ersten Elektrodenabschnitts (11) ausgebildet sind, um den ersten Elektrodenabschnitt (11) zu umgeben.

4. Elektrodenanordnung nach Anspruch 1, wobei
eine Oberfläche des verlängerten Elektrodenabschnitts (2) mit einer Oberfläche des zweiten Bindeabschnitts (43) verbunden ist.

5. Elektrodenanordnung nach Anspruch 4, wobei
der zweite Bindeabschnitt (43) einen Ausschnitt (5) enthält, welcher der Aussparung entspricht.

6. Elektrodenanordnung nach Anspruch 2, wobei
die Trennmembran einen vierten Bindeabschnitt (43) enthält, der zwischen den benachbarten aufnehmenden Abschnitten (31) angeordnet ist.

7. Elektrodenanordnung nach Anspruch 6, ferner umfassend
einen fünften Bindeabschnitt (41), der an einem Rand des aufnehmenden Abschnitts angeordnet ist und den ersten unbeschichteten Bereich (13) überlappt.

8. Elektrodenanordnung nach Anspruch 7, wobei
die Trennmembran (300) einen sechsten Bindeabschnitt (45) enthält, der in einer Richtung parallel zu dem fünften Bindeabschnitt (41) ausgebildet ist, und
der fünfte Bindeabschnitt (41) und der sechste Bindeabschnitt (45) jeweils an gegenüberliegenden Seiten des ersten Elektrodenabschnitts angeordnet sind.

9. Elektrodenanordnung nach Anspruch 8, wobei
der vierte Bindeabschnitt (43) und/oder der fünfte Bindeabschnitt (41) und/oder der sechste Bindeabschnitt (45) in einer Mehrzahl ausgebildet sind und/oder wobei
der vierte Bindeabschnitt (43), der fünfte Bindeabschnitt (41) und der sechste Bindeabschnitt (45) so ausgebildet sind, dass sie die Begrenzungslinie des ersten Elektrodenabschnitts (11) umgeben.

10. Elektrodenanordnung nach einem der vorangehenden Ansprüche, wobei
die ersten Elektroden (100) und die zweiten Elektroden (200) dazu konfiguriert sind, abwechselnd gestapelt zu werden, und/oder wobei
der aufnehmende Abschnitt (31) dazu konfiguriert ist, mindestens drei aufeinander folgende Enden des ersten Elektrodenabschnitts (11) aufzunehmen.

11. Elektrodenanordnung nach einem der vorangehenden Ansprüche, wobei
die Trennmembran (300) ein erstes Element (33) und ein zweites Element (35) enthält, die jeweils gegenüberliegende Oberflächen des ersten Elektrodenabschnitts (11) überlappen, so dass sich der erste Elektrodenabschnitt (11) dazwischen befindet, und
das erste Element (33) und das zweite Element (35) dazu konfiguriert sind, entlang der Begrenzungslinie des ersten Elektrodenabschnitts (11) verbunden zu werden, um den aufnehmenden Abschnitt (31) zu bilden.

12. Elektrodenanordnung nach einem der vorangehenden Ansprüche, wobei
die erste Elektrode (100) eine positive Elektrode ist und die zweite Elektrode (200) eine negative Elektrode ist und/oder wobei
eine Fläche des zweiten Elektrodenabschnitts (21) größer als die des ersten Elektrodenabschnitts (11) ist.

## Revendications

1. Ensemble d'électrodes, comprenant :
une pluralité de premières électrodes (100) comprenant une première partie d'électrode (11) comprenant une première couche de matériau actif (11b) et une première région non revêtue (13) électriquement connectée à la première partie d'électrode (11) ;
une membrane de séparation (300) qui reçoit chaque première partie d'électrode (11), qui comprend une pluralité de parties de réception (31) disposées à des intervalles prédéterminés, et qui est incurvée de telle sorte que des surfaces respectives de parties de réception voisines (31) se fassent mutuellement face ; et
une pluralité de deuxièmes électrodes (200) qui sont respectivement positionnées entre les parties de réception (31) se faisant mutuellement face de façon à chevaucher la première partie d'électrode (11), et qui comprennent respectivement une deuxième partie d'électrode (21) comprenant une deuxième couche de matériau actif et une deuxième région non revêtue (23) électriquement connectée à la deuxième partie d'électrode (21),
dans lequel la membrane de séparation (300) comprend une première partie de liaison (41) qui est positionnée à un bord de la partie de réception (31) et qui scelle de façon étanche un côté de la partie de réception (31), et la première région non revêtue (13) est configurée de façon à croiser la première partie de liaison (41) de façon à faire saillie à l'extérieur de la partie de réception (31),
dans lequel :
la membrane de séparation (300) comprend une paire de deuxièmes parties de liaison (43) qui sont respectivement reliées à des extrémités opposées de la première partie de liaison (41) et qui sont respectivement formées au niveau d'un bord de la partie de réception (31) dans une direction croisant la première partie de liaison (41), et
dans lequel :
la deuxième partie d'électrode (21) comprend une partie d'électrode étendue (2) faisant saillie à l'extérieur de la ligne de bordure de la première partie d'électrode (11), et la partie d'électrode étendue (2) comprend au moins une encoche (3) qui est concave vers la ligne de bordure de la première partie d'électrode (11).

2. Ensemble d'électrodes selon la revendication 1, dans lequel :
la membrane de séparation (300) comprend une troisième partie de liaison (45) qui est formée dans une direction parallèle à la première partie de liaison (41), et
la première partie de liaison (41) et la troisième partie de liaison (45) sont respectivement positionnées sur des bords opposés de la première partie d'électrode (11).

3. Ensemble d'électrodes selon la revendication 2, dans lequel :
au moins l'une de la première partie de liaison (41), de la deuxième partie de liaison (43) et de la troisième partie de liaison (45) est formée par pluralités, et/ou dans lequel :
la première partie de liaison (41), la deuxième partie de liaison (43) et la troisième partie de liaison (45) sont formées le long d'une ligne de bordure de la première partie d'électrode (11) de façon à entourer la première partie d'électrode (11).

4. Ensemble d'électrodes selon la revendication 1, dans lequel :
une surface de la partie d'électrode étendue (2) est reliée à une surface de la deuxième partie de liaison (43).

5. Ensemble d'électrodes selon la revendication 4, dans lequel :
la deuxième partie de liaison (43) comprend une entaille (5) correspondant à l'encoche.

6. Ensemble d'électrodes selon la revendication 2, dans lequel :
la membrane de séparation comprend une quatrième partie de liaison (43) positionnée entre les parties de réception voisines (31).

7. Ensemble d'électrodes selon la revendication 6, comprenant de plus :
une cinquième partie de liaison (41) positionnée à un bord de la partie de réception chevauchant la première région non revêtue (13).

8. Ensemble d'électrodes selon la revendication 7, dans lequel :
la membrane de séparation (300) comprend une sixième partie de liaison (45) formée dans une direction parallèle à la cinquième partie de liaison (41), et
la cinquième partie de liaison (41) et la sixième partie de liaison (45) sont respectivement positionnées sur des côtés opposés de la première partie d'électrode.

9. Ensemble d'électrodes selon la revendication 8, dans lequel :
au moins l'une de la quatrième partie de liaison (43), de la cinquième partie de liaison (41) et de la sixième partie de liaison (45) est formée par pluralités, et/ou dans lequel :
la quatrième partie de liaison (43), la cinquième partie de liaison (41) et la sixième partie de liaison (45) sont formées de façon à entourer la ligne de bordure de la première partie d'électrode (11).

10. Ensemble d'électrodes selon l'une des revendications précédentes, dans lequel :
les premières électrodes (100) et les deuxièmes électrodes (200) sont configurées de façon à être empilées en alternance, et/ou dans lequel :
la partie de réception (31) est configuré de façon à recevoir au moins trois parmi des extrémités consécutives de la première partie d'électrode (11).

11. Ensemble d'électrodes selon l'une des revendications précédentes, dans lequel :
la membrane de séparation (300) comprend un premier élément (33) et un deuxième élément (35) qui chevauchent respectivement des surfaces opposées de la première partie d'électrode (11) avec la première partie d'électrode (11) entre celles-ci, et
le premier élément (33) et le deuxième élément (35) sont configurés de façon à être reliés le long de la ligne de bordure de la première partie d'électrode (11) de façon à former la partie de réception (31).

12. Ensemble d'électrodes selon l'une des revendications précédentes, dans lequel :
la première électrode (100) est une électrode positive, et la deuxième électrode (200) est une électrode négative, et/ou dans lequel :
une surface de la deuxième partie d'électrode (21) est supérieure à celle de la première partie d'électrode (11).
